# EUROPEAN PATENT SPECIFICATION

(11) **EP 4 224 455 B1**
(45) Date of publication and mention of the grant of the patent: **14.10.2026**
(21) Application number: 21874792.1
(22) Date of filing: 21.04.2021
(51) Int. Cl.: G08G 1/09, G08G 1/16

(54) **TRAFFIC MANAGING SYSTEM**
VERKEHRSVERWALTUNGSSYSTEM
SYSTÈME DE GESTION DE TRAFIC

(30) Priority: 30.09.2020 JP 2020164913
(43) Date of publication of application: 09.08.2023
(73) Proprietor: Hitachi, Ltd., Tokyo 100-8280 (JP)
(72) Inventor: HASEJIMA Noriyasu, Tokyo 100-8280 (JP); SAKAYORI Go, Tokyo 100-8280 (JP)
(74) Representative: Mewburn Ellis LLP
(86) International application number: PCT/JP2021/016111
(87) International publication number: WO 2022/070484

(56) References cited:
- EP-B1- 2 858 039
- WO-A1-2021/033378
- JP-A- 2008 027 170
- JP-A- 2008 027 170
- JP-A- 2016 115 250
- JP-A- 2020 508 509
- JP-A- 2020 510 570
- JP-A- 2021 033 582
- US-A1- 2019 287 396
- US-A1- 2019 329 771
- US-A1- 2019 380 035
- US-A1- 2020 242 922
- SHEHU HARISU ABDULLAHI ET AL: "Distributed Mutual Exclusion Algorithms for Intersection Traffic Problems", IEEE ACCESS, IEEE, USA, vol. 8, 27 July 2020 (2020-07-27), pages 138277 - 138296, XP011802858, DOI: 10.1109/ACCESS.2020.3012573
- DRESNER K. ET AL: "A Multiagent Approach to Autonomous Intersection Management", JOURNAL OF ARTIFICIAL INTELLIGENCE RESEARCH, vol. 31, 31 March 2008 (2008-03-31), San Francisco CA US, pages 591 - 656, XP093327099, ISSN: 1076-9757, DOI: 10.1613/jair.2502

## Description

### Technical Field

The present invention relates to a traffic management system which enables smooth traffic flow control of a vehicle and a pedestrian in cooperation with an infrastructure system.

### Background Art

As methods of controlling a vehicle group at an intersection, for example, autonomous intersection management (AIM) of NPL 1 and cooperative vehicle intersection control (CVIC) of NPL 2 are known.

The autonomous intersection management (AIM) of NPL 1 is a method of dividing an intersection into fine cells and temporally managing rights of occupancy of the cells, and is a method of controlling a vehicle group by determining whether to permit passage in response to a passage permission request from a vehicle depending on whether another vehicle occupies a course through which the vehicle is to pass and returning the result.

Further, the cooperative vehicle intersection control (CVIC) of NPL 2 is a method of predicting traveling trajectories of all vehicles entering an intersection and controlling speeds of the respective vehicle so as to eliminate the possibility of collision.

In addition, there is also known a vehicle driving assistance device of PTL 1 in which an infrastructure system side and a vehicle system cooperate with each other and a risk is determined on a vehicle side to issue a warning to a driver in order to secure safety at an intersection.

SHEHU HARISU ABDULLAHI ET AL: "Distributed Mutual Exclusion Algorithms for Intersection Traffic Problems" discloses a system and as well as distributed algorithms for managing vehicle traffic at intersections using a single token-based system, wherein four routers/devices are positioned at the four ends of an intersection, wherein one token circulates among the routers in such a way that only the router holding the token can grant vehicles permission to enter the critical section (intersection) at a time. The routers communicate via token requests and transfers.

US 2019/380035 A1 (JURK REINHARD [DE]) discloses a method and system for secure and efficient provision of at least partly autonomous driving modes for vehicles through server-based authorization

EP 2 858 039 B1 (DEUTSCHES ZENTRUM FÜR LUFT- UND RAUMFAHRT E V [DE]) discloses a system for managing vehicle access to road sections using digital tokens. The system employs a centralized or decentralized control infrastructure that issues entry authorization tokens to vehicles, functioning similarly to physical objects. Once a token is issued, it can't be reissued until returned.

### Citation List

### Patent Literature

PTL 1: JP 2011-044063 A

### Non-Patent Literature

NPL 1: K.Dresner and P.Stone "A multiagent approach to autonomous intersection management" Journal of Artificial Intelligent Research vol.31 no.1 pp.591-656 2008
NPL 2: J.Lee and B.Park "Development and evaluation of a cooperative vehicle intersection control algorithm under the connected vehicles environment" IEEE Transactions on Intelligent Transportation Systems vol.13 no.1 pp.81-90 2012

### Summary of Invention

### Technical Problem

In NPL 1 and NPL 2, however, a ground-side device that controls a traffic flow is required to acquire detailed position information, speed information, information of travel courses intended to travel, and the like of all vehicles traveling at an intersection at a high speed and with a high frequency, and to calculate appropriate entry timings to the intersection and appropriate traveling speeds. Since the amount of data that needs to be processed by these methods is, for example, about several MB/second, the ground-side device that controls the traffic flow is required to have high computer performance, and a communication system between the ground-side device and vehicle-mounted devices is also required to have high-speed and large-capacity communication performance. Therefore, the traffic flow control according to NPL 1 and NPL 2 is highly difficult in terms of techniques and costs.

Further, a technique disclosed in PTL 1 is a technique for determining a risk on the basis of information transmitted from the infrastructure side and current vehicle information to issue a warning. In a case where the technique of PTL 1 is applied in order to optimize the entire traffic flow, it is necessary to collect and calculate all pieces of vehicle information and infrastructure information on the ground side, and thus, a high-performance computing device and large-capacity communication performance are required as in NPL 1 and NPL 2.

The present invention has been made in view of the above points, and an object thereof is to provide a traffic management system which enables safe traffic flow control at a pedestrian crossing without using a high-performance processing device or large-capacity communication performance, as defined in appended claim 1.

### Solution to Problem

In order to solve the above problems, a traffic management system of the present invention is set forth in claim 1.

### Advantageous Effects of Invention

According to the traffic management system of the present invention, it is possible to control the traffic flow such that a pedestrian can safely cross the pedestrian crossing without using the high-performance processing device or the large-capacity communication performance. Incidentally, other objects and effects which have not been described above become apparent from embodiments to be described hereinafter.

### Brief Description of Drawings

[FIG. 1] FIG. 1 is a schematic layout diagram of a traffic management system according to an embodiment.
[FIG. 2A] FIG. 2A is an explanatory diagram of a procedure when a vehicle enters an area A₁ₐ.
[FIG. 2B] FIG. 2B is an explanatory diagram of a procedure after the vehicle enters the area A₁ₐ.
[FIG. 3] FIG. 3 is a flowchart illustrating a procedure when the vehicle passes a pedestrian crossing.
[FIG. 4A] FIG. 4A is an explanatory diagram of a procedure when the vehicle enters the area A₁ₐ and another vehicle enters an area A_{1b}.
[FIG. 4B] FIG. 4B is an explanatory diagram of a procedure after the vehicle enters the area A₁ₐ and another vehicle enters the area A_{1b}.
[FIG. 5A] FIG. 5A is an explanatory diagram of a procedure when the pedestrian enters the area A₁ₐ from a sidewalk.
[FIG. 5B] FIG. 5B is an explanatory diagram of a procedure when the pedestrian enters the area A_{1b} from the area A₁ₐ.
[FIG. 5C] FIG. 5C is an explanatory diagram of a procedure when the pedestrian leaves the area A_{1b} to the sidewalk.
[FIG. 6] FIG. 6 is an explanatory diagram of a procedure when the pedestrian enters the area A₁ₐ and the vehicle enters the area A_{1b}.
[FIG. 7] FIG. 7 is an explanatory diagram of a procedure when the pedestrian enters the area A_{1b} from the area A₁ₐ and another pedestrian enters the area A_{1b} from the sidewalk.
[FIG. 8] FIG. 8 is a flowchart illustrating a procedure when the pedestrian enters the pedestrian crossing.
[FIG. 9] FIG. 9 is a flowchart illustrating a procedure when the pedestrian leaves the pedestrian crossing.
[FIG. 10] FIG. 10 is an explanatory diagram of a procedure of traffic flow control using a traffic signal.
[FIG. 11] FIG. 11 is a flowchart illustrating a procedure of the traffic flow control using the traffic signal.
[FIG. 12] FIG. 12 is an explanatory diagram of a procedure of traffic flow control for a vehicle without communication equipment.
[FIG. 13] FIG. 13 is an explanatory diagram of a procedure for a pedestrian to request entry using communication equipment.
[FIG. 14] FIG. 14 is a functional block diagram of the traffic management system according to the embodiment.

### Description of Embodiments

A traffic management system 100 of the present invention is a system that controls a traffic flow of a vehicle V, a motorcycle, and the like such that a pedestrian P, a bicycle, and the like can safely cross a pedestrian crossing 5, and includes an area management device 1 and a detection device 2, which are installed as an infrastructure system in the vicinity of the pedestrian crossing 5 to be monitored, and a token management device 3 installed on a cloud.

Incidentally, the area management device 1 and the token management device 3 are specifically computers each including hardware such as a computers device such as a CPU, a main storage device such as a semiconductor memory, an auxiliary storage device, and a communication apparatus. These computers implement each of functions to be described later by the computing device executing a program loaded in the main storage device, and a description will be given hereinafter while omitting such well-known techniques as appropriate.

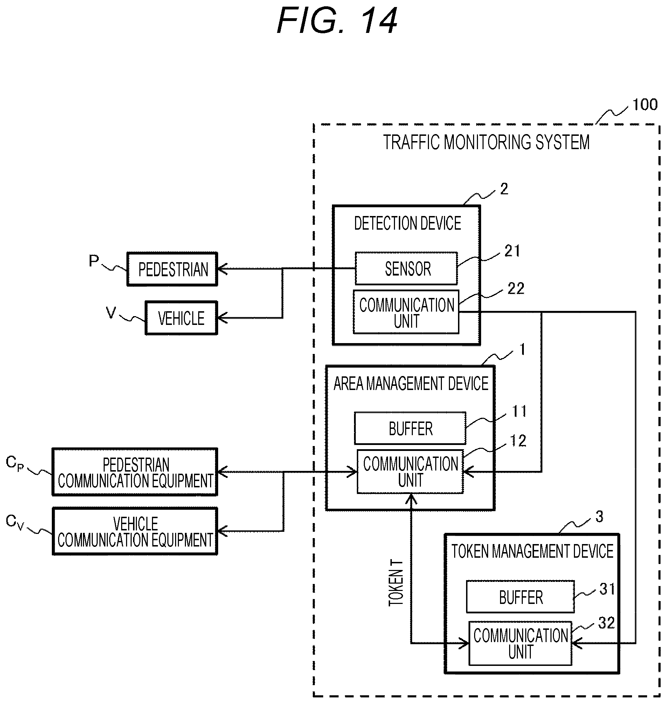

FIG. 14 is a functional block diagram of the traffic management system 100. As illustrated here, the area management device 1 includes a buffer 11 and a communication unit 12, the detection device 2 includes a sensor 21 and a communication unit 12, and the token management device 3 includes a buffer 31 and a communication unit 32. The communication units of the respective devices are connected to be capable of communicating with each other, and the communication unit 12 of the area management device 1 is connected to be capable of communicating with pedestrian communication equipment C_{P} carried by the pedestrian P and in-vehicle communication equipment C_{V} mounted on the vehicle V. Although not illustrated in FIG. 14, a plurality of the area management devices 1 and a plurality of the detection devices 2 are installed for pedestrian crossing 5 to be monitored, and the plurality of area management devices 1 and the plurality of detection devices 2 are connected to the token management device 3.

The pedestrian crossing 5 monitored by the traffic management system 100 is divided into a plurality of virtual areas, and the area management device 1 manages whether to permit entry to each of the virtual areas in the form of a right of occupancy. Further, in the present system, the number of tokens T corresponding to the number of the virtual areas (preferably the same as the number of the virtual areas) is prepared, and the right of occupancy of each of the virtual areas is set in the buffer 11 of the area management device 1 or the buffer 31 of the token management device 3 in the form of being added to the token T. The buffer 31 of the token management device 3 is provided with a plurality of management regions D according to types of movable bodies such as a vehicle and a pedestrian and the number of the virtual areas. Incidentally, the token T moving between the area management device 1 and the token management device 3 is data of about several bytes, and thus, computer performance and communication performance required for implementation of the present system are low, and about 1/1000 of calculation performance and communication performance required in PTL 1 and NPLs 1 and 2 is sufficient.

The detection device 2, which is an infrastructure sensor, is installed on a utility pole, an upper portion of the utility pole, or the like, and includes the sensor 21 that monitors the pedestrian P, the vehicle V, and the like in each monitoring area. The sensor 21 is, for example, a monitoring camera using a monocular camera or a stereo camera, or a light detection and ranging (LiDAR), but the type may be changed according to an installation environment. The detection device 2 detects entry of the pedestrian P, the vehicle V, or the like into the monitoring area, and instructs the area management device 1 to secure the right of occupancy, thereby providing a mechanism which enables the pedestrian P to safely pass through the monitoring area.

When the vehicle V approaches the pedestrian crossing 5, the in-vehicle communication equipment C_{V} issues a request for entry to the pedestrian crossing 5 to the area management device 1, and then, receives a response corresponding to a location of the token T from the area management device 1. As a result, a vehicle control device of the vehicle V decelerates or stops the vehicle V or enters the pedestrian crossing 5 in consideration of the safety of the pedestrian P according to the response of the area management device 1.

Hereinafter, embodiments of the traffic management system 100 of the present invention will be described with reference to the drawings.

### First Embodiment

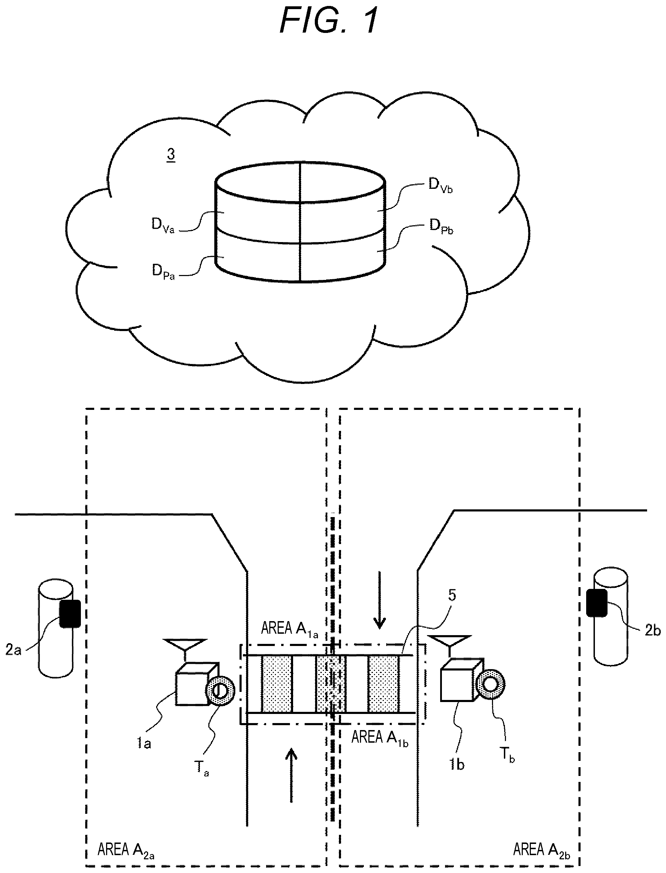

FIG. 1 is a schematic layout diagram of the traffic management system 100 according to a first embodiment that controls a traffic flow at the pedestrian crossing 5 to be monitored. Incidentally, movement directions of the vehicle V passing through the pedestrian crossing 5 are limited to directions of arrows illustrated for lanes, but movement directions of the pedestrian P or a bicycle crossing the pedestrian crossing 5 are not particularly limited, and the vehicle V may move from a left sidewalk to a right sidewalk in the drawing, or may move from the right sidewalk to the left sidewalk.

In the traffic management system 100 of the present embodiment, an area management device 1a that manages a right of occupancy of a virtual area A₁ₐ on the left side of the pedestrian crossing and an area management device 1b that manages a right of occupancy of a virtual area A_{1b} on the right side of the pedestrian crossing are installed near the pedestrian crossing 5, and a detection device 2a that monitors a wide area A₂ₐ including the area A₁ₐ and a detection device 2b that monitors a wide area A_{2b} including the area A_{1b} are installed. Incidentally, the area management devices 1a and 1b may be actual devices, but may be virtual device objects on a program executed inside the detection devices 2a and 2b or the token management device 3.

Further, in the traffic management system 100 of the present embodiment, the token management device 3 is arranged on a cloud, and four management regions D, obtained by multiplying "2" which is the number of virtual areas on the pedestrian crossing 5 by "2" which is the number of types of movable bodies, are prepared in the buffer 31 of the token management device 3 as the management regions D related to the pedestrian crossing 5. Here, four recording areas include a management region D_{Va} in which a token Tₐ is registered when the vehicle V enters the area A₁ₐ, a management region D_{Pa} in which the token Tₐ is registered when the pedestrian P (and the bicycle) enters the area A₁ₐ, a management region D_{Vb} in which a token T_{b} is registered when the vehicle V enters the area A_{1b}, and a management region D_{Pb} in which the token T_{b} is registered when the pedestrian P (and the bicycle) enters the area A_{1b}. Incidentally, FIG. 1 illustrates a configuration in which the buffer 31 is divided into four logical regions, but the buffer 31 is not necessarily divided into the plurality of logical regions D in a case where area information or movable body type information is added to the token T.

In an initial state of the traffic management system 100 illustrated in FIG. 1, buffers 11a and 11b of the area management devices 1a and 1b respectively hold the tokens Tₐ and T_{b}, and transmit the tokens T to each of the management regions D of the token management device 3 according to situations of the vehicle V and the pedestrian P. The detection devices 2a and 2b are connected to the area management devices 1a and 1b, respectively, and are arranged so as to be capable of monitoring the virtual areas A₂ₐ and A_{2b}. Incidentally, the virtual areas A₂ₐ and A_{2b} are ranges that need to be monitored to secure safety when the pedestrian P crosses the pedestrian crossing 5, and it is assumed that the detection devices 2 having detection performance capable of monitoring these ranges are installed.

The area management devices 1a and 1b manage the rights of occupancy of the areas A₁ₐ and A_{1b} using the tokens Tₐ and T_{b}, respectively, determine whether to permit entry according to locations of the tokens T when receiving requests for entry to the areas A₁ₐ and A_{1b} from the vehicle V or the detection devices 2a and 2b, and transmit appropriate instructions to the vehicle V and the like.

The detection devices 2a and 2b include sensors 21a and 21b that monitor the areas A₂ₐ and A_{2b}, respectively. Since an attachment position and an attitude of each sensor are accurately calibrated when each detection device is installed, positions of the vehicle V and the pedestrian P in the areas A₂ₐ and A_{2b} can be accurately grasped. Incidentally, the detection devices 2a and 2b are assumed to be of a fixed type as illustrated in FIG. 1, but may be attached to a movable body such as an unmanned aerial vehicle (UAV). In such a case, a position and an attitude of the sensor 21 are estimated using techniques such as a global navigation satellite system (GNSS), an inertial mesurement unit (IMU), and simultaneous localization and mapping (SLAM).

These detection devices 2a and 2b calculate the positions of the vehicle V and the pedestrian P on the basis of information acquired by the sensors 21a and 21b. The computing device used for this calculation is, for example, a combination of a CPU, a ROM, and a RAM, a field programmable gate array (FPGA) which is a rewritable logic circuit, or an application specific integrated circuit (ASIC) which is an integrated circuit for a specific application.

The buffer 31 of the token management device 3 is a storage unit that can be edited from the area management devices 1a and 1b but can only be referred to from the detection devices 2a and 2b. The reason why editing is enabled only from the area management devices 1a and 1b is to limit the editing authority since there is a high possibility that it becomes difficult to secure the safety of the pedestrian P at the pedestrian crossing 5 when another device rewrites a state of the token T.

### <Operation example when vehicle V₁ enters pedestrian crossing 5>

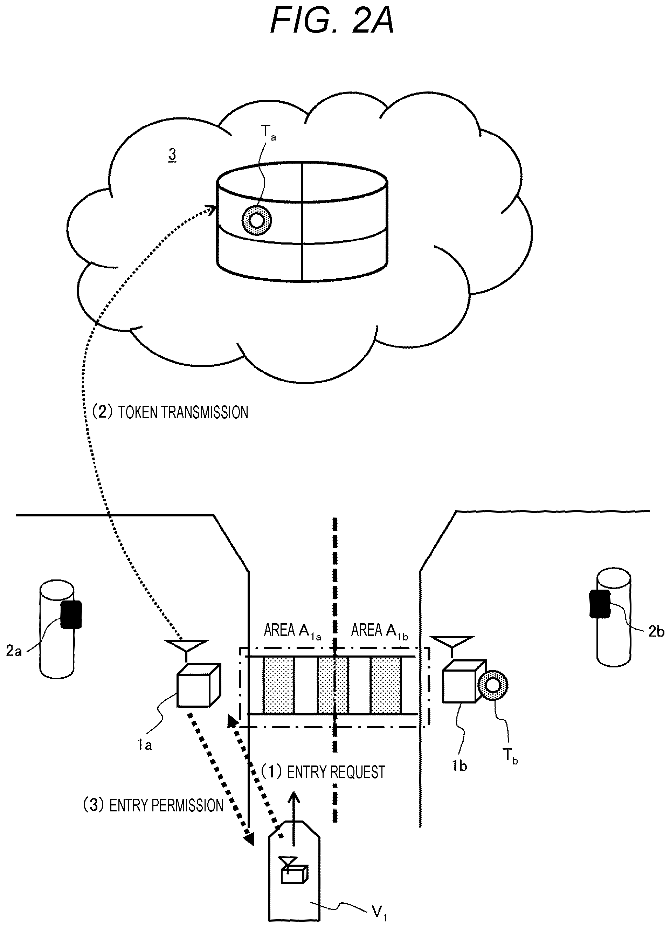

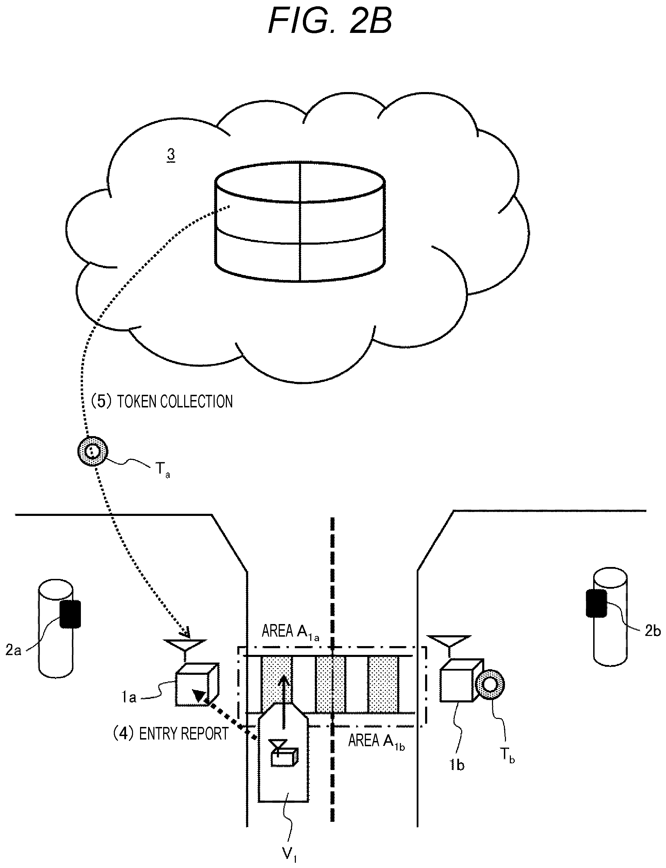

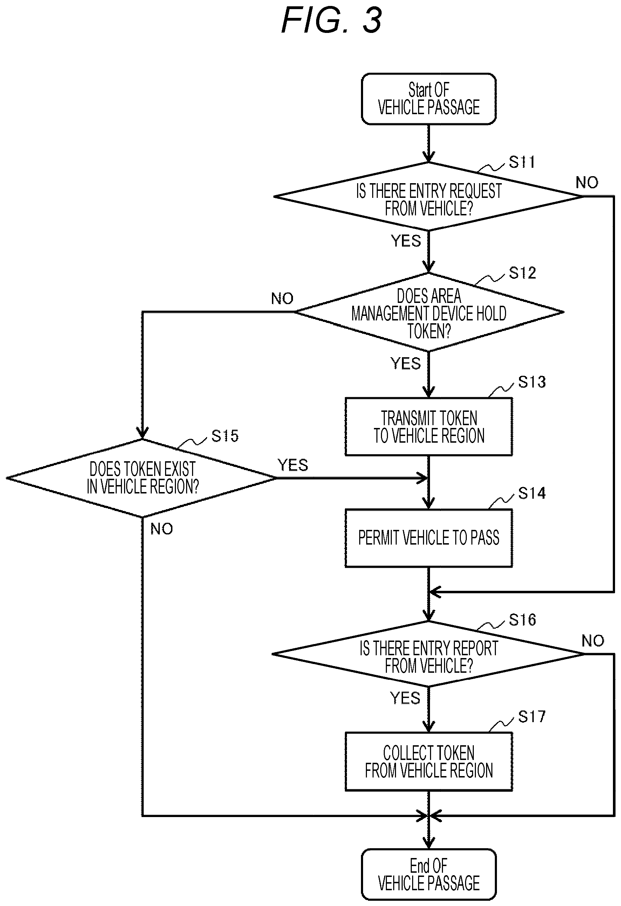

Here, an operation example when a vehicle V₁ including the in-vehicle communication equipment C_{V} enters the pedestrian crossing 5 from the lower side in the drawing under the environment of FIG. 1 will be described with reference to FIGS. 2A, 2B, and 3.

FIG. 2A is a diagram illustrating a procedure in which the vehicle V₁ enters the area A₁ₐ on the left side of the pedestrian crossing 5 from the lower side. (1) First, before entering the pedestrian crossing 5, the vehicle V₁ issues a request for entry to the area A₁ₐ to the area management device 1a using the in-vehicle communication equipment C_{V}. (2) Next, the area management device 1a confirms a location of the token Tₐ, and transmits the token Tₐ representing the right of occupancy of the area A₁ₐ to the management region D_{Va} for vehicles of the token management device 3 when the area management device 1a itself holds the token Tₐ. (3) When the token Tₐ is set in the management region D_{Va} and the area A₁ₐ is occupied by the vehicle in the system, the area management device 1a gives the vehicle V₁ permission to enter the area A₁ₐ. Incidentally, after the procedure of (1) of FIG. 2A, the vehicle V₁ decelerates on the assumption that the permission to enter the area A₁ₐ is not to be given, and the vehicle V₁ stops at a position before the area A₁ₐ and waits for reception of the entry permission until the entry permission is given in a case where the entry permission is not acquirable even immediately before the area A₁ₐ.

FIG. 2B is a diagram illustrating a procedure after the vehicle V₁ enters the area A₁ₐ. (4) First, the vehicle V₁ reports entry to the area management device 1a at a point in time of entering the area A₁ₐ. (5) Then, the area management device 1a to which the entry has been reported accesses the token management device 3 and collects the token Tₐ from the management region D_{Va} for vehicles. As a result, the area management device 1a that has collected the token Tₐ can set the right of occupancy of the area A₁ₐ to the next movable body (vehicle V, pedestrian P, or the like).

Here, there is a case where the communication of (4) of FIG. 2B is not established and it is difficult to perform the entry report, but the entry report is repeated as long as the vehicle V₁ is within a communication range of the area management device 1a. Incidentally, the mode in which the vehicle V₁ reports the entry to the area management device 1a has been exemplified in (4) of FIG. 2B. However, a mode in which the area management device 1a confirms the completion of entry of the vehicle V₁ after a lapse of a predetermined time from the time when the area management device 1a transmits the token Tₐ to the token management device 3 in (2) of FIG. 2A or a mode in which the detection device 2a monitors the area A₁ₐ and the area management device 1a collects the token Tₐ from the management region D_{Va} when the passage of the vehicle V₁ has been confirmed may be adopted.

FIG. 3 is a flowchart for describing the operation of the traffic management system 100 under the environment of FIGS. 2A and 2B. Incidentally, processing in FIG. 3 is repeated at intervals of about 20 ms, for example.

First, in S11, the area management device 1 confirms whether there is an entry request from the vehicle V. Then, the processing proceeds to S12 if there is an entry request, and proceeds to S16 to be described later if there is no entry request.

In S12, the area management device 1 determines whether the token T is held. Then, the processing proceeds to S13 if the token T is held by the area management device 1 itself, and proceeds to S15 if the token T is not held by the area management device 1 itself.

In S13, the area management device 1 transmits the token T to a vehicle management region D_{V} of the token management device 3. Then, in S14, the area management device 1a permits the vehicle V to enter the area A₁.

On the other hand, in S15, that is, when the area management device 1 does not hold the token T, the area management device 1 confirms whether the token T is already set in the vehicle management region D_{V}. Then, if the token T is already set in the vehicle management region D_{V}, the processing proceeds to S14 described above, and the area management device 1 permits the vehicle V to enter the area A₁. On the other hand, if the token T is not set in the vehicle management region D_{V} (in other words, in a case where the token T is set in a pedestrian management region D_{P}), the flow of FIG. 3 is ended without issuing the entry permission to the vehicle V.

In S16, the area management device 1 confirms whether there is an entry report from the vehicle V. Then, the processing proceeds to S17 if there is an entry report, and the flow of FIG. 3 is ended if there is no entry report.

In S17, the area management device 1 collects the token T from the vehicle management region D_{V} of the token management device 3, and then ends the flow of FIG. 3.

### <Operation example when vehicle V₁ and vehicle V₂ enter pedestrian crossing 5 from opposite directions>

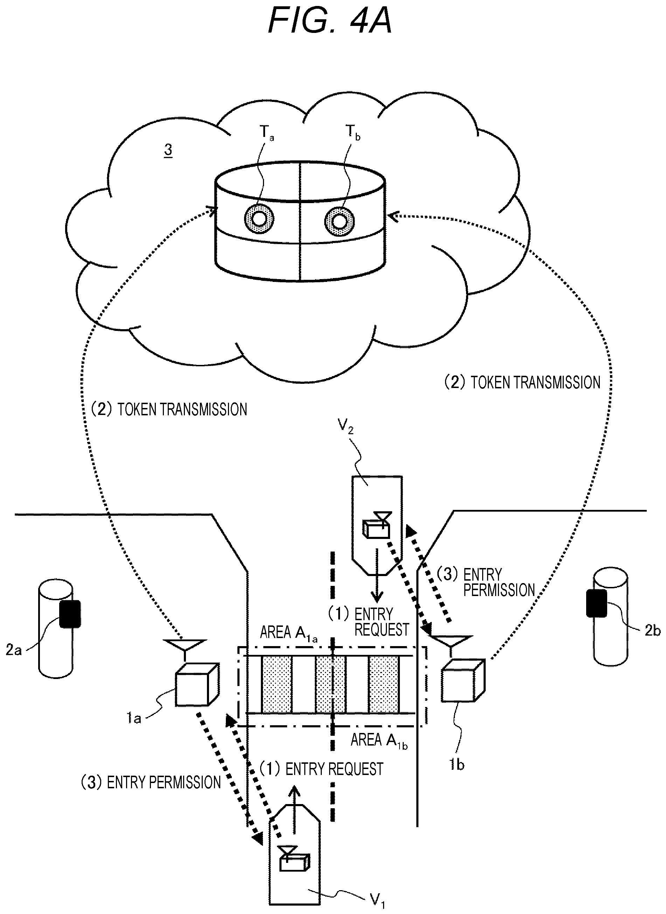

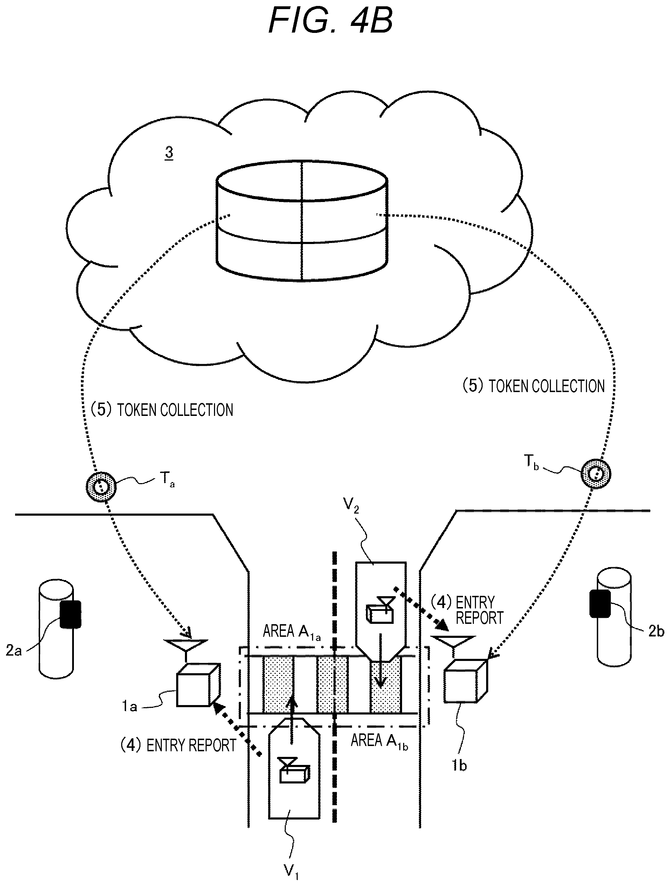

Next, an operation example when a vehicle V₂ including the in-vehicle communication equipment C_{V} enters the area A_{1b} on the right side of the pedestrian crossing 5 from the upper side in the drawing in addition to the vehicle V₁ in FIGS. 2A and 2B will be described with reference to FIGS. 4A and 4B.

FIG. 4A is a diagram illustrating a procedure when the vehicle V₁ enters the area A₁ₐ and the vehicle V₂ enters the area A_{1b}. (1) First, the vehicle V₁ requests for entry to the area A₁ₐ to the area management device 1a, and the vehicle V₂ requests for entry to the area A_{1b} to the area management device 1b. Hereinafter, the operation related to the vehicle V₁, which has been described with reference to FIGS. 2A and 2B, will be appropriately omitted. (2) Next, the area management device 1b confirms a location of the token T_{b}, and transmits the token T_{b} to the management region D_{Vb} for vehicles of the token management device 3 when the area management device 1b itself holds the token T_{b}. As a result, the token Tₐ representing the right of occupancy of the area A₁ₐ is set in the management region D_{Va} for vehicles, and the token T_{b} representing the right of occupancy of the area A_{1b} is set in the management region D_{Vb} for vehicles. (3) After the token Tₐ is set in the management region D_{Va}, the area management device 1a gives an entry permission to the vehicle V₁.

FIG. 4B is a diagram illustrating a procedure after the vehicle V₁ enters the area A₁ₐ and the vehicle V₂ enters the area A_{1b}. (4) First, the vehicle V₂ reports entry to the area management device 1b at a point in time of entering the area A_{1b}. (5) Then, the area management device 1b to which the entry has been reported accesses the token management device 3 and collects the token T_{b} from the management region D_{Vb} for vehicles. In this manner, the similar processing is executed for both vehicles even when the vehicles V enter from both directions.

### <Operation example when pedestrian P₁ crosses pedestrian crossing 5>

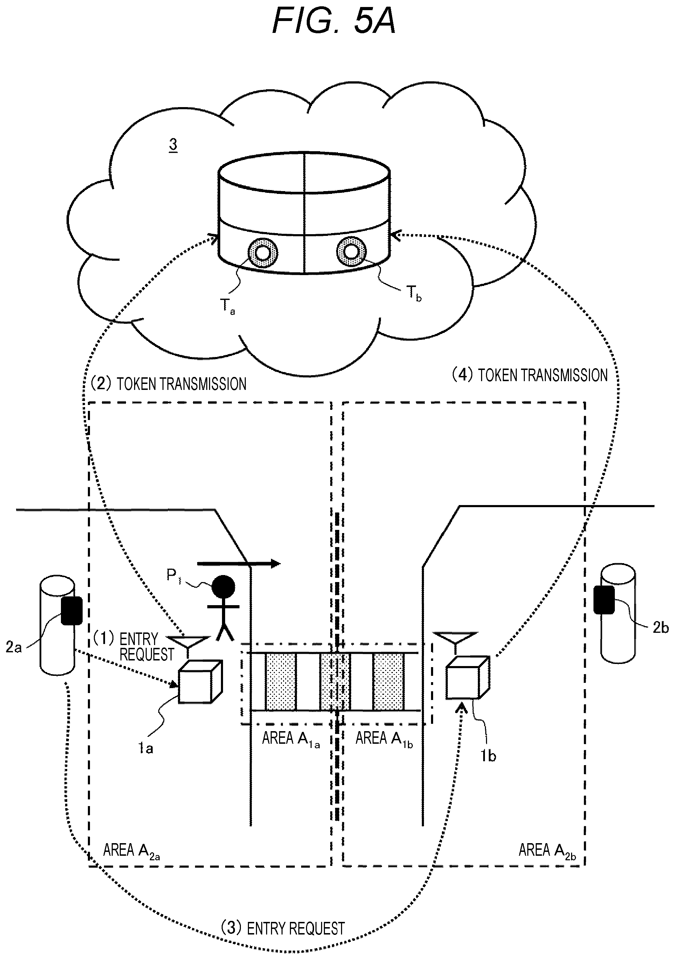

Next, an operation example when a pedestrian P₁ crosses the pedestrian crossing 5 will be described with reference to FIGS. 5A to 5C.

FIG. 5A is a diagram illustrating a procedure when the pedestrian P₁ on the left sidewalk moves toward the pedestrian crossing 5 and enters the area A₁ₐ. (1) First, when detecting the pedestrian P₁ in the area A₂ₐ and determining that the pedestrian P₁ is moving toward the area A₁ₐ of the pedestrian crossing 5, the detection device 2a requests the area management device 1a to permit the pedestrian P₁ to enter the area A₁ₐ. (2) Next, the area management device 1a confirms a location of the token Tₐ, and transmits the token Tₐ representing the right of occupancy of the area A₁ₐ to the management region D_{Pa} for pedestrians of the token management device 3 when the area management device 1a itself holds the token Tₐ. (3) Further, the detection device 2a requests the area management device 1b that manages the area A_{1b} adjacent to the area A₁ₐ to permit the pedestrian P₁ to enter the area A_{1b}. (4) In this case, the area management device 1b confirms a location of the token T_{b}, and transmits the token Tₐ representing the right of occupancy of the area A_{1b} to the management region D_{Pb} for pedestrians of the token management device 3 when the area management device 1b itself holds the token T_{b}. As a result, both the tokens Tₐ and T_{b} are registered in the management regions D_{Pa} and D_{Pb} for pedestrians of the token management device 3, and thus, the pedestrian P₁ temporarily occupies the pedestrian crossing 5 on the traffic management system 100.

In this manner, the present embodiment is configured such that the pedestrian P occupies the pedestrian crossing 5 in the system when the pedestrian P approaches the pedestrian crossing 5 because it is considered that the safety of the pedestrian P should be prioritized before a traffic flow of the vehicle V in view of a current traffic situation. Therefore, even if there is an entry request from the vehicle V under the environment of FIG. 5A, the vehicle V is not permitted to enter the pedestrian crossing 5.

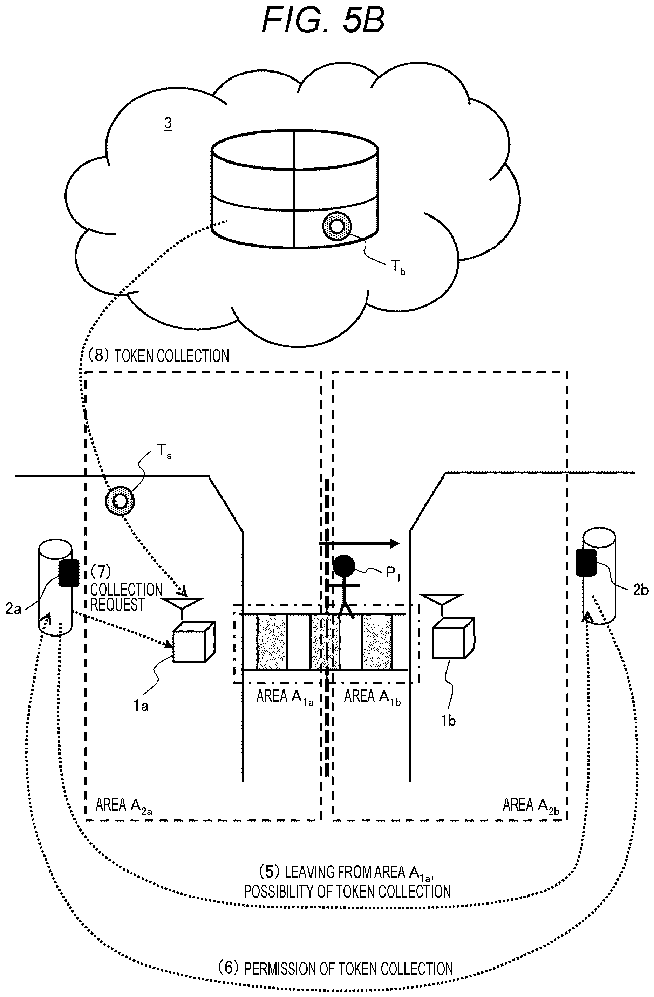

FIG. 5B is a diagram illustrating a procedure when the pedestrian P₁ enters the area A_{1b} from the area A₁ₐ. (5) First, when detecting that the pedestrian P₁ has left the area A₁ₐ, the detection device 2a inquires of the detection device 2b about whether the token Tₐ can be collected. (6) At this time, the detection device 2b determines whether there is a pedestrian moving from the management area A_{1b} toward the area A₁ₐ, and gives the detection device 2a permission to collect the token Tₐ when there is no such pedestrian. (7) The detection device 2a that has received the permission to collect the token Tₐ requests the area management device 1a to collect the token Tₐ. (8) The area management device 1a that has received the request collects the token Tₐ from the management region D_{Pa} for pedestrians of the token management device 3.

In this manner, the detection device 2a allows the detection device 2b to determine whether the token Tₐ can be collected, so that it is possible to prevent the vehicle V from entering the area A₁ₐ in a situation where there is a pedestrian moving from the area A_{1b} toward the area A₁ₐ. Further, for example, when detection ranges of the detection device 2a and the detection device 2b overlap each other, the detection device 2b can detect a pedestrian still present in the area A₁ₐ even if the detection by the detection device 2a is impossible.

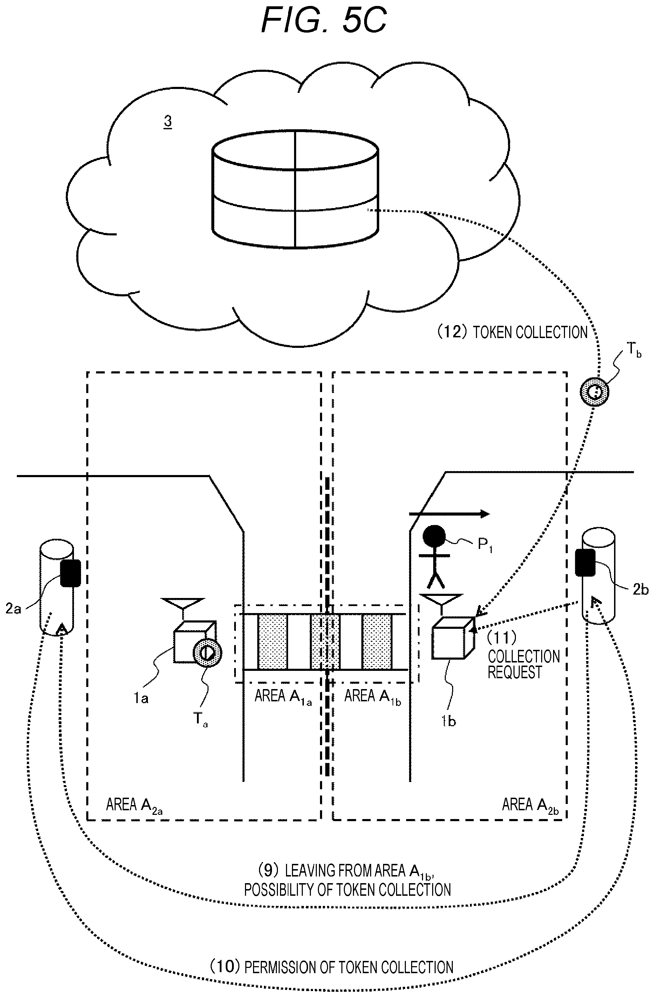

FIG. 5C is a diagram illustrating a procedure when the pedestrian P₁ leaves the area A_{1b} and finishes crossing the pedestrian crossing 5. (9) When detecting that the pedestrian P₁ has left from the area A_{1b}, the detection device 2b inquires of the detection device 2a about whether the token T_{b} can be collected. (10) At this time, the detection device 2a determines whether there is a pedestrian moving from the area A₁ₐ toward the area A_{1b}, and the detection device 2a gives the detection device 2b permission to collect the token T_{b} if there is no such pedestrian. (11) The detection device 2b that has received the permission to collect the token T_{b} requests the area management device 1b to collect the token T_{b}. (12) The area management device 1b that has received the request collects the token T_{b} from the management region D_{Pb} for pedestrians of the token management device 3. As a result, the traffic management system 100 returns to the initial state of FIG. 1 in which the area management device 1a holds the token Tₐ and the area management device 1b holds the token T_{b}.

### <Operation example when vehicle V₂ approaches before pedestrian P₁ enters pedestrian crossing 5>

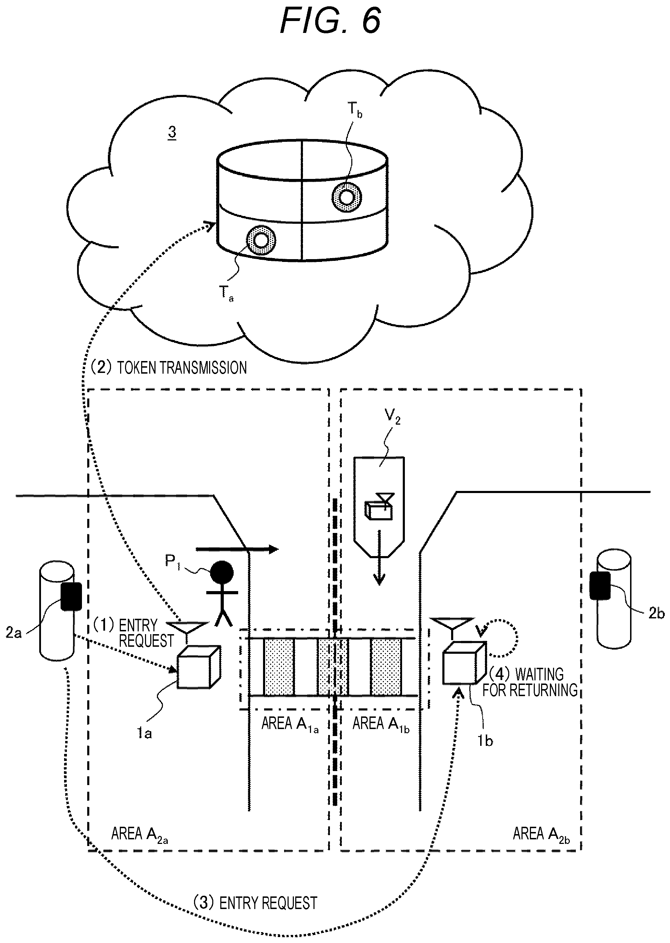

FIG. 6 illustrates an operation example when the pedestrian P₁ is moving toward area A₁ₐ of the pedestrian crossing 5, and the area management device 1b has already issued entry permission to the vehicle V₂. (1) In this case, when detecting the pedestrian P₁ in the area A₂ₐ and determining that the pedestrian P₁ is moving toward the area A₁ₐ of the pedestrian crossing 5, the detection device 2a requests the area management device 1a to permit the pedestrian P₁ to enter the area A₁ₐ. (2) Next, the area management device 1a confirms a location of the token Tₐ, and transmits the token Tₐ representing the right of occupancy of the area A₁ₐ to the management region D_{Pa} for pedestrians of the token management device 3 when the area management device 1a itself holds the token Tₐ. (3) Further, the detection device 2a requests the area management device 1b to permit the pedestrian P₁ to enter the area A_{1b} as described above with reference to FIG. 5A. However, the token T_{b} has been set in the management region D_{Vb} for vehicles of the token management device 3 in FIG. 6, and thus, the token T_{b} is registered in the management region D_{Pb} for pedestrians, and it is difficult for the pedestrian P₁ to acquire the right of occupancy. (4) In this case, the area management device 1b waits until there is an entry report from the vehicle V₂ and the token T_{b} can be collected. Thereafter, the area management device 1b prioritizes a request from the detection device 2a, and, even if there is an entry request for the area A_{1b} from the next vehicle, holds the request. Therefore, when the entry is reported from the illustrated vehicle V₂, the area management device 1b promptly resets the token T_{b} from the management region D_{Vb} for vehicles to the management region D_{Pb} for pedestrians. As a result, the pedestrian P₁ temporarily occupies the pedestrian crossing 5 in the system of the traffic management system 100 as illustrated in FIG. 5A, and the entry of the vehicle V into the pedestrian crossing 5 can be prohibited.

### <Operation example when pedestrian P₁ and pedestrian P₂ pass each other on pedestrian crossing 5>

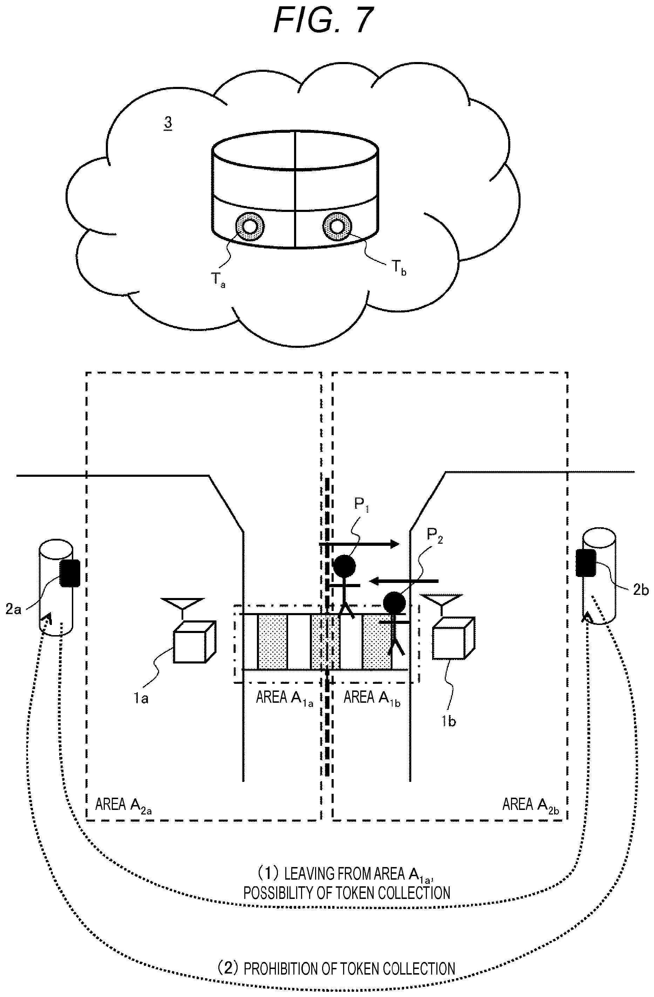

FIG. 7 is a diagram illustrating a procedure when the pedestrian P₁ moving in the right direction and a pedestrian P₂ moving in the left direction pass each other on the area A_{1b} of the pedestrian crossing 5. (1) When detecting that the pedestrian P₁ has left the area A₁ₐ, the detection device 2a inquires of the detection device 2b about whether the token Tₐ can be collected. (2) Here, since the pedestrian P₂ moving from the area A_{1b} toward the area A₁ₐ is present, the detection device 2b returns prohibition of collection of the token Tₐ to the detection device 2a. Therefore, the entry of the vehicle V into the area A₁ₐ is not permitted in the system until the pedestrian P₂ finishes crossing the pedestrian crossing 5.

### <Flowchart when pedestrian moving toward pedestrian crossing has been detected>

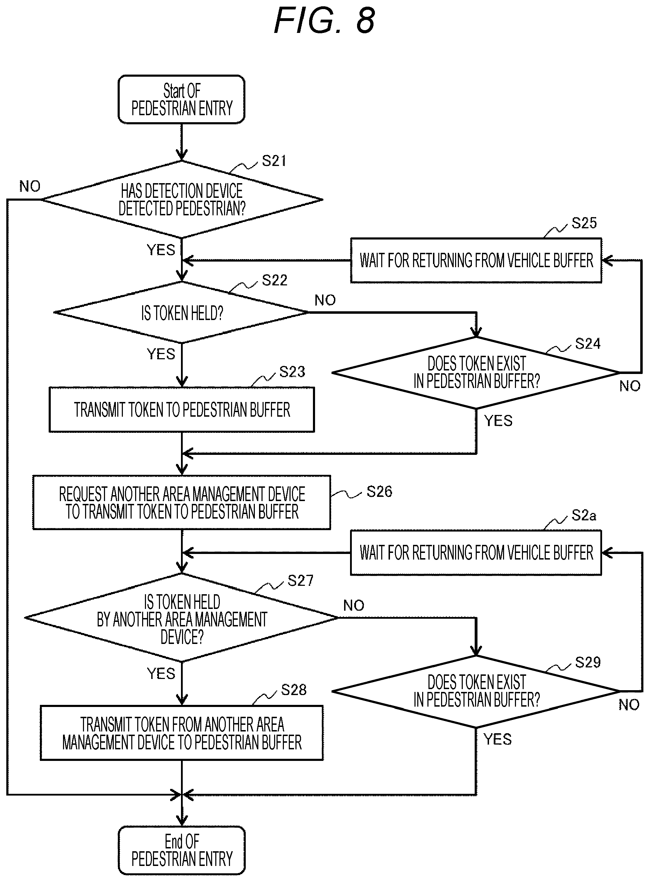

FIG. 8 illustrates a flow in a case where the detection device 2a has detected the pedestrian P₁ moving toward the pedestrian crossing 5 as illustrated in FIGS. 5A and 6. Incidentally, processing of FIG. 8 is repeated at intervals of about 20 ms, for example, similarly to the processing of FIG. 3.

First, in S21, the detection device 2a determines whether the pedestrian P₁ moving toward the pedestrian crossing 5 is present. Then, the processing proceeds to S22 if there is such a pedestrian, and the flow of FIG. 8 is ended if not.

In S22, the detection device 2a requests the area management device 1a to permit the pedestrian P₁ to enter the area A₁ₐ, and the area management device 1a confirms whether the area management device 1a itself holds the token Tₐ. Then, the processing proceeds to S23 if the token Tₐ is held by the area management device 1a itself, and proceeds to S24 if the token Tₐ is not held by the area management device 1a itself.

In S23, the area management device 1a transmits the token Tₐ to the management region D_{Pa} for pedestrians of the token management device 3.

On the other hand, in S24, that is, when the area management device 1a does not hold the token Tₐ, the area management device 1a confirms whether the token Tₐ has already been set in the management region D_{Pa} for pedestrians. Then, the processing directly proceeds to the next S26 if the token Tₐ has already been set in the management region Dₚₐ for pedestrians, and returning of the token Tₐ from the management region D_{Va} for vehicles is waited in S25 if the token Tₐ does not exist in the management region D_{Pa} for pedestrians. When the returning has been performed, the flow is resumed from S202.

When the processing in the area management device 1a is finished, the area management device 1a requests the other area management device 1b to permit the pedestrian P₁ to enter the area A_{1b} in S26.

In S27, the area management device 1b confirms whether the area management device 1b itself holds the token T_{b}. Then, the processing proceeds to S28 if the token T_{b} is held by the area management device 1b itself, and proceeds to S29 if the token T_{b} is not held by the area management device 1b itself.

In S28, the area management device 1b transmits the token T_{b} to the management region D_{Pb} for pedestrians of the token management device 3.

On the other hand, in S29, that is, when the area management device 1b does not hold the token T_{b}, the area management device 1b confirms whether the token T_{b} has already been set in the management region D_{Pb} for pedestrians. Then, the processing of FIG. 8 is ended if the token T_{b} has already been set in the management region D_{Pb} for pedestrians, and returning of the token T_{b} from the management region D_{Vb} for vehicles is waited in S2a if the token T_{b} does not exist in the management region D_{Pb} for pedestrians. When the returning has been performed, the flow is resumed from S27.

Incidentally, the processing is not in a form of a standby state of a program, but is an image in which the processing is terminated once and the flow is resumed after the returning operation occurs in S25 and S2a described above. That is, other operations are not stopped either by the waiting here, and reception of a return request from the vehicle side can also be received in parallel.

### <Flowchart when pedestrian crosses pedestrian crossing>

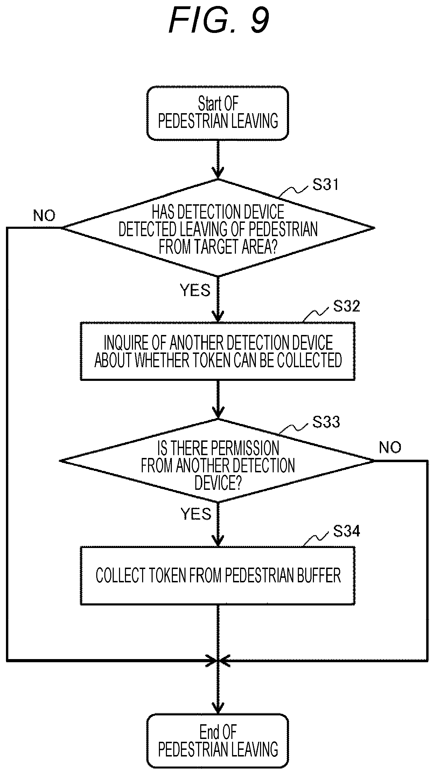

FIG. 9 illustrates a flow when the pedestrian moves across the area of the pedestrian crossing as illustrated in FIGS. 5B and 7. Incidentally, the processing of FIG. 9 is repeated at intervals of about 20 ms, for example, similarly to the processing of FIGS. 3 and 8.

First, it is confirmed in S31 whether the detection device 2a has detected leaving of the pedestrian P₁ from the area A₁ₐ. Then, the processing proceeds to S22 if the leaving is confirmed, and when the processing of FIG. 9 is ended if the leaving is not confirmed.

In S32, the detection device 2a inquires the other detection device 2b about whether the token Tₐ can be collected from the management region D_{Pa} for pedestrians to the area management device 1a.

In S33, the detection device 2a confirms whether there is permission from the other detection device 2b. Then, the processing proceeds to S34 if there is permission, and the processing of FIG. 9 is ended if there is no permission. The other detection device 2b determines whether there is a pedestrian moving from the area A_{1b} to the area A₁ₐ, and the other detection device 2b permits the detection device 2a to collect the token Tₐ if there is no such pedestrian.

In S34, the detection device 2a instructs the area management device 1a to collect the token Tₐ, and the area management device 1a collects the token Tₐ from the management region D Pa for pedestrians.

### <Traffic signal control method when pedestrian crosses pedestrian crossing>

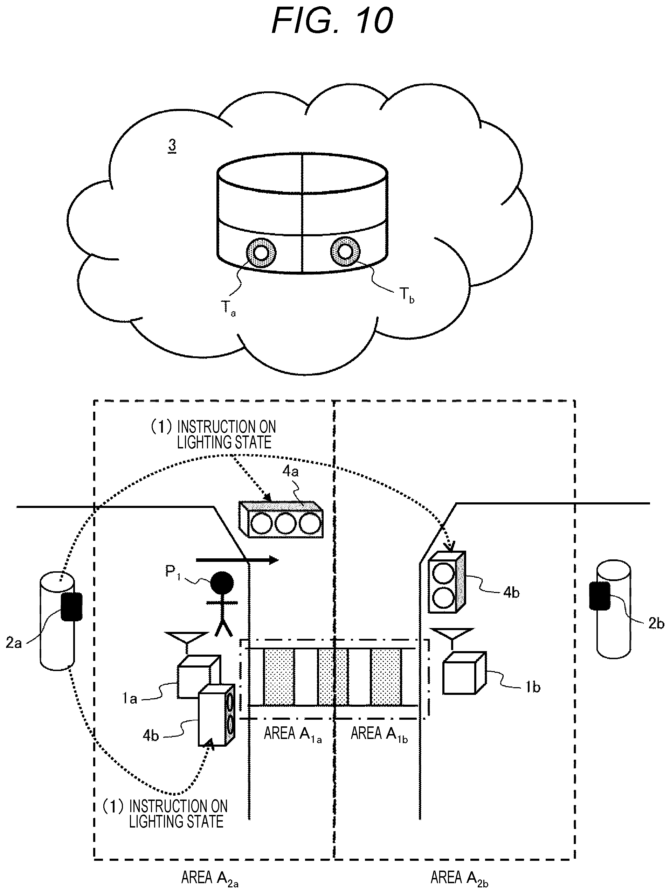

FIG. 10 illustrates an example in which the traffic management system 100 of the present embodiment controls a traffic flow using a traffic signal. Incidentally, it is assumed here that the tokens Tₐ and T_{b} have been set in the management regions D_{Pa} and D_{Pb} for pedestrians as illustrated in FIGS. 5A and 7.

When referring to the buffer 31 of the token management device 3 and confirming that both the tokens Tₐ and T_{b} are set in the management regions D_{Pa} and D_{Pb} for pedestrians, the detection device 2a instructs a vehicle traffic signal 4a to be red and instructs a pedestrian traffic signal 4b to be green. As a result, the pedestrian P can safely cross the pedestrian crossing. On the other hand, when any one of the management regions D_{Pa} and D_{Pb} for pedestrians does not have the token T, the detection device 2a instructs the vehicle traffic signal 4a to be green and instructs the pedestrian signal 4b to be red. This is for prohibiting the pedestrian P from crossing the pedestrian crossing 5 under such a situation since there is a possibility that the vehicle V may pass the pedestrian crossing when it is difficult for the pedestrian P to secure the right of occupancy of the entire pedestrian crossing.

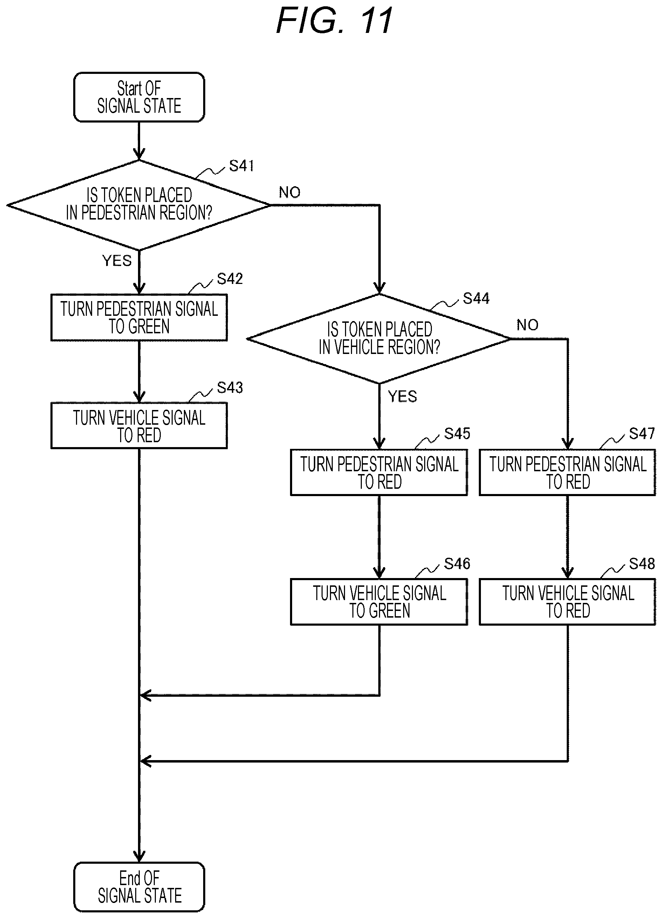

FIG. 11 illustrates a flow when the traffic control using the traffic signal is performed. Since this system is created so as to prioritize a pedestrian, the presence or absence of the token T in a pedestrian region is first confirmed in order to prioritize the pedestrian.

First, the detection device 2 confirms whether the token T is set in the pedestrian region (S41), turns the pedestrian traffic signal 4b to green (S42) and turns the vehicle traffic signal 4a to red (S43) if the pedestrian token exists.

Further, if the token T does not exist in the pedestrian region but is placed in the vehicle region (S44), the pedestrian traffic signal 4b is turned red (S45), and the vehicle traffic signal 4a is turned green (S46).

Further, when both the tokens T are present in the area management device in the present system, the pedestrian traffic signal 4b is turned red for safety (S47), and the vehicle traffic signal 4a is also turned red (S48).

Incidentally, it is not always necessary to turn both the traffic signals to red as described above, and the traffic signals may be turned off or may be turned on by time control as in conventional traffic signals.

Regarding the traffic control, it is also possible to assume an occupancy pattern that is directly applied to a pedestrian or a vehicle without using the traffic signal. For example, it is possible to determine entry without using a traffic signal by presenting information indicating that entry is possible to the vehicle through a car navigation system or a head-up display. Further, in a case where a vehicle is in automatic driving or the like, a table or the like based on information from the area management device is created in advance, so that the vehicle can be automatically stopped when there is no information of the token T. Further, as a method of presenting information to a pedestrian side, a method such as an LCD can be used as a substitute for the signal, and it is also conceivable to present information via a communication device (for example, a mobile phone) possessed by an individual.

As described above, it is possible to control the traffic flow such that the pedestrian can safely cross the pedestrian crossing without using a high-performance processing device or large-capacity communication performance according to the traffic management system 100 of the present embodiment.

### Second Embodiment

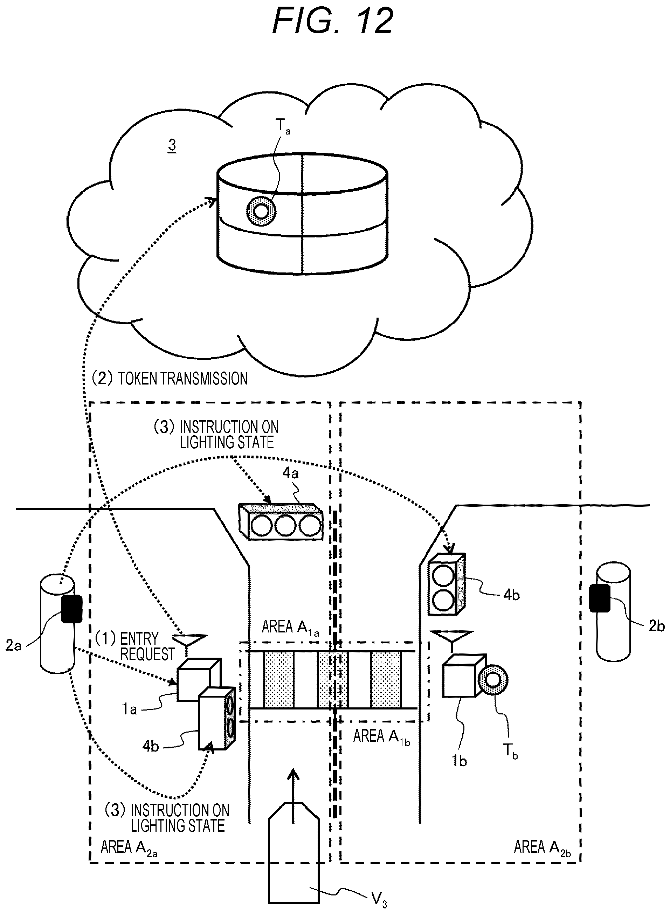

Next, the traffic management system 100 of a second embodiment will be described with reference to FIG. 12. Incidentally, redundant descriptions for common points with the first embodiment are omitted.

In the first embodiment, the vehicle V requests for entry to the area management device 1 using the in-vehicle communication equipment Cᵥ, but it is necessary to assume a vehicle without the in-vehicle communication equipment Cᵥ. Therefore, in the traffic management system 100 of the present embodiment, the detection device 2 detects the vehicle V without the in-vehicle communication equipment C_{V} and controls a traffic flow.

FIG. 12 is a diagram illustrating a procedure when traffic flow control is performed in a vehicle V₃ without communication equipment. (1) First, when the detection device 2a detects that the vehicle V₃ has entered the area A₂ₐ, the detection device 2a transmits an entry request to the area management device 1a. (2) When the area management device 1a holds the token Tₐ, the area management device 1a sets the token Tₐ in the management region D_{Va} for vehicles of the token management device 3. (3) Thereafter, the detection device 2a turns the vehicle traffic signal 4a to green and turns the pedestrian traffic signal 4b to red. As a result, crossing of the pedestrian P can be prevented without hindering traveling of the vehicle V₃.

(4) Further, when detecting that the vehicle V₃ has entered the area A₁ₐ, the detection device 2a requests the area management device 1a to collect the token Tₐ although not illustrated. (5) As a result, the area management device 1a collects the token Tₐ from the token management device 3. Incidentally, a basic flow is the processing described in the first embodiment, and the detection device 2a is responsible for points of a request and a report by communication.

A method using the detection device 2 may be performed for a vehicle having communication equipment. In this case, there are a case where a request from the detection device 2 is early and a case where a request from the vehicle is early, but the token T is placed in the same region in both the cases, and thus, no contradiction occurs, and the vehicle can travel without any problem. Further, it is possible to more smoothly control a traffic flow by using a detection result from the detection device 2 when it is difficult to perform the communication.

### Third Embodiment

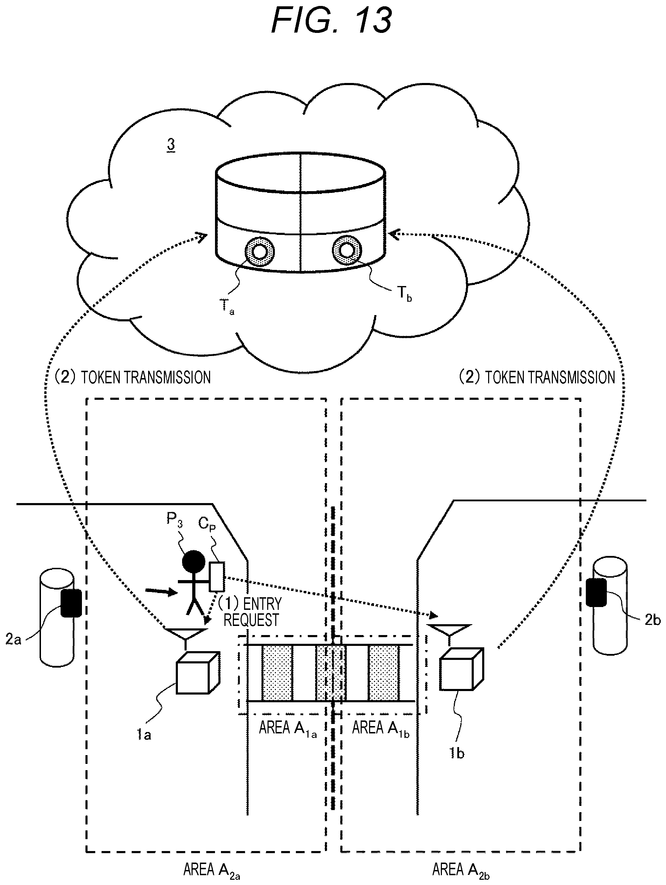

Next, the traffic management system 100 of a third embodiment will be described with reference to FIG. 13. Incidentally, redundant descriptions for common points with the above embodiments are omitted.

In the first embodiment, the pedestrian P₁ does not actively work on the traffic management system 100, but it is also possible for a pedestrian to actively request entry using communication equipment (the pedestrian communication equipment C_{P}) such as a mobile phone. In this case, a mechanism for issuing an entry request to the area management device 1 when the pedestrian communication equipment C_{P} exists in a communication range may be set.

FIG. 13 illustrates a procedure when a pedestrian P₃ issues an entry request to the area management device 1 using the pedestrian communication equipment C_{P}. (1) First, the pedestrian P₁ uses the pedestrian communication equipment C_{P} to issue requests for entry to the areas A₁ₐ and A_{1b} to the area management devices 1a and 1b. (2) When holding the tokens T, the respective area management devices 1 set the tokens Tₐ and T_{b} in the management regions D_{Pa} and D_{Pb} for pedestrians of the token management device 3. This operation is consequently similar to the operation in a case where the detection device 2 has detected the pedestrian P illustrated in FIG. 5A of the first embodiment. Further, when control is performed in the third embodiment, the number of all pedestrians who have entered the pedestrian crossing 5 is stored and shared by the respective area management devices 1.

Further, a report or the like described in the first embodiment is not made when the pedestrian P₁ leaves the area A₁ₐ, and a returning request is made using the pedestrian communication equipment C_{P} only when the pedestrian P₁ leaves the area A_{1b}. At this time, the area management devices 1 store the number of pedestrians and the like who have entered the areas, and the respective area management devices 1 collect the tokens T when all the people leave the areas.

### Reference Signs List

T, Tₐ, T_{b} token
1, 1a, 1b area management device
2, 2a, 2b detection device
3 token management device
4a vehicle traffic signal
4b pedestrian traffic signal
5 pedestrian crossing
V₁, V₂ vehicle with communication equipment
V₃ vehicle without communication equipment
P₁, P₂ pedestrian without communication equipment
P₃ pedestrian with communication equipment

## Claims

1. A traffic management system (100) that is configured to control a traffic flow of a first movable body traveling along a roadway and a second movable body crossing a pedestrian crossing (5) based on a token (Ta), the traffic management system comprising (100):
an area management device (1) that is configured to manage the token (Ta) representing a right of occupancy of a corresponding virtual area set on the pedestrian crossing (5);
a detection device (2) that is configured to detect the first movable body and the second movable body in a monitoring area including the virtual area; and
a token management device (3) including a buffer (31) providing a first-movable-body management region and a second-movable-body management region in which the token is settable,
wherein, when the first movable body approaches the pedestrian crossing (5), the area management device (1) is configured
to transmit the token (Ta) to the first-movable-body management region if holding the token (Ta), and
if not holding the token (Ta), to transmit the token (Ta) to the first-movable-body management region after the token (Ta) has been returned from the second-movable-body management region,
**characterised in that**
the pedestrian crossing (5) is divided into a plurality of the virtual areas each virtual area having a respective corresponding token (Ta, Tb), and
the area management device (1), the detection device (2), the first-movable-body management region, and the second-movable-body management region are provided for each of the virtual areas; further **characterised in that**
when a first detection device (2) detects that the second movable body has left from a first virtual area of the plurality of virtual areas, the first detection device (2) is configured to request a second detection device (2), which has control over a second virtual area, of the plurality of virtual areas, adjacent to the first virtual area, to permit collection of the token (Ta) for the first virtual area from the second-movable-body management region;
the second detection device (2) is configured to permit the first detection device (2) to collect the token (Ta) when the second movable body moving from the second virtual area to the first virtual area is not detected, and is configured not to permit the first detection device (2) to collect the token (Ta) when the second movable body moving from the second virtual area to the first virtual area is detected; and wherein
the traffic flow at the pedestrian crossing is controlled based on the location of the respective tokens in the buffer (31).

2. The traffic management system (100) according to claim 1, wherein
the area management device (1) is configured to determine that the first movable body approaches the pedestrian crossing (5) when entry to the pedestrian crossing (5) is requested via communication equipment of the first movable body.

3. The traffic management system (100) according to claim 1, wherein
the area management device (1) is configured to determine that the first movable body approaches the pedestrian crossing (5) in a case where the detection device (2) has detected the first movable body approaching the pedestrian crossing (5).

4. The traffic management system (100) according to claim 1, wherein
the area management device (1) is configured to collect the token (Ta) from the first-movable-body management region in a case where the first movable body has entered the pedestrian crossing (5).

5. The traffic management system (100) according to claim 1, wherein
when the second movable body approaches the pedestrian crossing (5), the area management device (1) is configured to
transmit the token (Ta) to the second-movable-body management region if holding the token (Ta), and
if not holding the token (Ta), transmit the token (Ta) to the second-movable-body management region after the token (Ta) has been returned from the first-movable-body management region.

6. The traffic management system (100) according to claim 5, wherein
the area management device (1) is configured to determine that the second movable body approaches the pedestrian crossing (5) in a case where entry to the pedestrian crossing (5) has been requested via communication equipment of the second movable body.

7. The traffic management system (100) according to claim 5, wherein
the area management device (1) is configured to determine that the second movable body approaches the pedestrian crossing (5) in a case where the detection device (2) has detected the second movable body approaching the pedestrian crossing (5).

8. The traffic management system (100) according to claim 5, wherein
the area management device (1) is configured to collect the token (Ta) from the second-movable-body management region in a case where the second movable body has entered the pedestrian crossing (5).

## Patentansprüche

1. Verkehrsverwaltungssystem (100), das dazu ausgelegt ist, einen Verkehrsstrom eines ersten bewegbaren Körpers, der sich entlang einer Straße bewegt, und eines zweiten bewegbaren Körpers, der einen Fußgängerübergang (5) quert, basierend auf einem Token (Ta) zu steuern, wobei das Verkehrsverwaltungssystem (100) Folgendes umfasst:
eine Bereichsverwaltungsvorrichtung (1), die dazu ausgelegt ist, das Token (Ta), das ein Recht auf das Besetzen eines entsprechenden virtuellen Bereichs, der an dem Fußgängerübergang (5) eingestellt ist, darstellt, zu verwalten;
eine Detektionsvorrichtung (2), die dazu ausgelegt ist, den ersten bewegbaren Körper und den zweiten bewegbaren Körper in einem Überwachungsbereich, der den virtuellen Bereich umfasst, zu detektieren; und
eine Tokenverwaltungsvorrichtung (3), die einen Puffer (31) umfasst, welcher eine Erster-bewegbarer-Körper-Verwaltungsregion und eine Zweiter-bewegbarer-Körper-Verwaltungsregion, in der das Token einstellbar ist, bereitstellt,
wobei, wenn der erste bewegbare Körper sich dem Fußgängerübergang (5) nähert, die Bereichsverwaltungsvorrichtung (1) dazu ausgelegt ist,
das Token (Ta) an die Erster-bewegbarer-Körper-Verwaltungsregion zu übertragen, wenn sie das Token (Ta) besitzt, und
wenn sie das Token (Ta) nicht besitzt, das Token (Ta) an die Erster-bewegbarer-Körper-Verwaltungsregion zu übertragen, nachdem das Token (Ta) von der Zweiter-bewegbarer-Körper-Verwaltungsregion zurückgegeben wurde,
**dadurch gekennzeichnet, dass**
der Fußgängerübergang (5) in eine Vielzahl von virtuellen Bereichen unterteilt ist, wobei jeder virtuelle Bereich ein jeweiliges entsprechendes Token (Ta, Tb) aufweist, und
die Bereichsverwaltungsvorrichtung (1), die Detektionsvorrichtung (2), die Erster-bewegbarer-Körper-Verwaltungsregion und die Zweiter-bewegbarer-Körper-Verwaltungsregion für jeden der virtuellen Bereiche bereitgestellt sind; ferner **dadurch gekennzeichnet, dass**
wenn eine erste Detektionsvorrichtung (2) detektiert, dass der zweite bewegbare Körper einen ersten virtuellen Bereich aus der Vielzahl von virtuellen Bereichen verlassen hat, die erste Detektionsvorrichtung (2) dazu ausgelegt ist, eine zweite Detektionsvorrichtung (2), welche die Kontrolle über einen zweiten virtuellen Bereich aus der Vielzahl von virtuellen Bereichen benachbart zu dem ersten Bereich hat, aufzufordern, das Einziehen des Tokens (Ta) für den ersten virtuellen Bereich von der Zweiter-bewegbarer-Körper-Verwaltungsregion zu erlauben;
die zweite Detektionsvorrichtung (2) dazu ausgelegt ist, der ersten Detektionsvorrichtung (2) zu erlauben, das Token (Ta) einzuziehen, wenn der zweite bewegbare Körper, der sich von dem zweiten virtuellen Bereich zu dem ersten virtuellen Bereich bewegt, nicht detektiert wird, und dazu ausgelegt ist, der ersten Detektionsvorrichtung (2) nicht zu erlauben, das Token (Ta) einzuziehen, wenn der zweite bewegbare Körper, der sich von dem zweiten virtuellen Bereich zu dem ersten virtuellen Bereich bewegt, detektiert wird; und wobei
der Verkehrsstrom an dem Fußgängerübergang basierend auf der Position der entsprechenden Tokens im Puffer (31) gesteuert wird.

2. Verkehrsverwaltungssystem (100) nach Anspruch 1, wobei
die Bereichsverwaltungsvorrichtung (1) dazu ausgelegt ist, zu bestimmen, dass sich der erste bewegbare Körper dem Fußgängerübergang (5) nähert, wenn ein Betreten des Fußgängerübergangs (5) über ein Kommunikationsgerät des ersten bewegbaren Körpers angefragt wird.

3. Verkehrsverwaltungssystem (100) nach Anspruch 1, wobei
die Bereichsverwaltungsvorrichtung (1) dazu ausgelegt ist, zu bestimmen, dass der erste bewegbare Körper sich dem Fußgängerübergang (5) nähert, falls die Detektionsvorrichtung (2) detektiert hat, dass sich der erste bewegbare Körper dem Fußgängerübergang (5) nähert.

4. Verkehrsverwaltungssystem (100) nach Anspruch 1, wobei
die Bereichsverwaltungsvorrichtung (1) dazu ausgelegt ist, das Token (Ta) von der Erster-bewegbarer-Körper-Verwaltungsregion einzuziehen, falls der erste bewegbare Körper den Fußgängerübergang (5) betreten hat.

5. Verkehrsverwaltungssystem (100) nach Anspruch 1, wobei
wenn der zweite bewegbare Körper sich dem Fußgängerübergang (5) nähert, die Bereichsverwaltungsvorrichtung (1) dazu ausgelegt ist,
das Token (Ta) an die Zweiter-bewegbarer-Körper-Verwaltungsregion zu übertragen, wenn sie das Token (Ta) besitzt, und
wenn sie das Token (Ta) nicht besitzt, das Token (Ta) an die Zweiter-bewegbarer-Körper-Verwaltungsregion zu übertragen, nachdem das Token (Ta) von der Erster-bewegbarer-Körper-Verwaltungsregion zurückgegeben wurde.

6. Verkehrsverwaltungssystem (100) nach Anspruch 5, wobei
die Bereichsverwaltungsvorrichtung (1) dazu ausgelegt ist, zu bestimmen, dass sich der zweite bewegbare Körper dem Fußgängerübergang (5) nähert, falls ein Betreten des Fußgängerübergangs (5) über ein Kommunikationsgerät des ersten bewegbaren Körpers angefragt wurde.

7. Verkehrsverwaltungssystem (100) nach Anspruch 5, wobei
die Bereichsverwaltungsvorrichtung (1) dazu ausgelegt ist, zu bestimmen, dass der zweite bewegbare Körper sich dem Fußgängerübergang (5) nähert, falls die Detektionsvorrichtung (2) detektiert hat, dass sich der zweite bewegbare Körper dem Fußgängerübergang (5) nähert.

8. Verkehrsverwaltungssystem (100) nach Anspruch 5, wobei
die Bereichsverwaltungsvorrichtung (1) dazu ausgelegt ist, das Token (Ta) von der Zweiter-bewegbarer-Körper-Verwaltungsregion einzuziehen, falls der zweite bewegbare Körper den Fußgängerübergang (5) betreten hat.

## Revendications

1. Système de gestion de trafic (100) qui est configuré pour commander un flux de trafic d'un premier corps mobile se déplaçant le long d'une route et d'un second corps mobile traversant un passage pour piétons (5) sur la base d'un jeton (Ta), le système de gestion de trafic comprenant (100) :
un dispositif de gestion de zone (1) qui est configuré pour gérer le jeton (Ta) représentant un droit d'occupation d'une zone virtuelle correspondante définie sur le passage pour piétons (5) ;
un dispositif de détection (2) qui est configuré pour détecter le premier corps mobile et le second corps mobile dans une zone de surveillance comprenant la zone virtuelle ; et
un dispositif de gestion de jeton (3) comprenant un tampon (31) fournissant une région de gestion de premier corps mobile et une région de gestion de second corps mobile dans laquelle le jeton peut être défini,
dans lequel, lorsque le premier mobile s'approche du passage pour piétons (5), le dispositif de gestion de zone (1) est configuré
pour transmettre le jeton (Ta) à la région de gestion de premier corps mobile si elle détient le jeton (Ta), et
s'il ne détient pas le jeton (Ta), pour transmettre le jeton (Ta) à la région de gestion de premier corps mobile après que le jeton (Ta) ait été renvoyé de la région de gestion de second corps mobile,
**caractérisé en ce que**
le passage pour piétons (5) est divisé en une pluralité des zones virtuelles, chaque zone virtuelle ayant un jeton correspondant respectif (Ta, Tb), et
le dispositif de gestion de zone (1), le dispositif de détection (2), la région de gestion de premier corps mobile et la région de gestion de second corps mobile sont prévus pour chacune des zones virtuelles ; **caractérisé en outre en ce que**
lorsqu'un premier dispositif de détection (2) détecte que le second corps mobile est parti d'une première zone virtuelle de la pluralité de zones virtuelles, le premier dispositif de détection (2) est configuré pour demander à un second dispositif de détection (2), qui a le contrôle sur une deuxième zone virtuelle, de la pluralité de zones virtuelles, adjacente à la première zone virtuelle, de permettre la collecte du jeton (Ta) pour la première zone virtuelle à partir de la région de gestion de second corps mobile ;
le second dispositif de détection (2) est configuré pour permettre au premier dispositif de détection (2) de collecter le jeton (Ta) lorsque le second corps mobile se déplaçant de la deuxième zone virtuelle vers la première zone virtuelle n'est pas détecté, et est configuré pour ne pas permettre au premier dispositif de détection (2) de collecter le jeton (Ta) lorsque le second corps mobile se déplaçant de la deuxième zone virtuelle vers la première zone virtuelle est détecté ; et dans lequel
le flux de trafic au passage pour piétons est commandé sur la base de l'emplacement des jetons respectifs dans le tampon (31).

2. Système de gestion de trafic (100) selon la revendication 1, dans lequel
le dispositif de gestion de zone (1) est configuré pour déterminer que le premier corps mobile s'approche du passage pour piétons (5) lorsque l'entrée vers le passage pour piétons (5) est demandée via un équipement de communication du premier corps mobile.

3. Système de gestion de trafic (100) selon la revendication 1, dans lequel
le dispositif de gestion de zone (1) est configuré pour déterminer que le premier corps mobile s'approche du passage pour piétons (5) dans un cas dans lequel le dispositif de détection (2) a détecté le premier corps mobile s'approchant du passage pour piétons (5).

4. Système de gestion de trafic (100) selon la revendication 1, dans lequel
le dispositif de gestion de zone (1) est configuré pour collecter le jeton (Ta) à partir de la région de gestion du premier corps mobile dans un cas dans lequel le premier corps mobile est entré dans le passage pour piétons (5).

5. Système de gestion de trafic (100) selon la revendication 1, dans lequel
lorsque le second corps mobile s'approche du passage pour piétons (5), le dispositif de gestion de zone (1) est configuré pour
transmettre le jeton (Ta) à la région de gestion de second corps mobile si elle détient le jeton (Ta), et
s'il ne détient pas le jeton (Ta), transmettre le jeton (Ta) à la région de gestion de second corps mobile après que le jeton (Ta) ait été renvoyé à partir de la région de gestion de premier corps mobile.

6. Système de gestion de trafic (100) selon la revendication 5, dans lequel
le dispositif de gestion de zone (1) est configuré pour déterminer que le second corps mobile s'approche du passage pour piétons (5) dans un cas dans lequel l'entrée vers le passage pour piétons (5) a été demandée via un équipement de communication du second corps mobile.

7. Système de gestion de trafic (100) selon la revendication 5, dans lequel
le dispositif de gestion de zone (1) est configuré pour déterminer que le second corps mobile s'approche du passage pour piétons (5) dans un cas dans lequel le dispositif de détection (2) a détecté le second corps mobile s'approchant du passage pour piétons (5).

8. Système de gestion de trafic (100) selon la revendication 5, dans lequel
le dispositif de gestion de zone (1) est configuré pour collecter le jeton (Ta) à partir de la région de gestion de second corps mobile dans un cas dans lequel le second corps mobile est entré dans le passage pour piétons (5).
